(19) Europäisches Patentamt
European Patent Office
Office européen des brevets

(11) **EP 2 219 930 B1**

(12) **FASCICULE DE BREVET EUROPEEN**

(45) Date de publication et mention
de la délivrance du brevet:
**25.05.2011 Bulletin 2011/21**

(21) Numéro de dépôt: **07871825.1**

(22) Date de dépôt: **10.12.2007**

(51) Int Cl.:
***B61L 25/02*** *(2006.01)*

(86) Numéro de dépôt international:
**PCT/FR2007/002030**

(87) Numéro de publication internationale:
**WO 2009/074724 (18.06.2009 Gazette 2009/25)**

(54) **DISPOSITIF DE MESURE DE DEPLACEMENT D'UN VEHICULE AUTOGUIDE**

VORRICHTUNG ZUM MESSEN DER BEWEGUNG EINES SELBSTGESTEUERTEN FAHRZEUGS

DEVICE FOR MEASURING THE MOVEMENT OF A SELF-GUIDED VEHICLE

(84) Etats contractants désignés:
**AT BE BG CH CY CZ DE DK EE ES FI FR GB GR
HU IE IS IT LI LT LU LV MC MT NL PL PT RO SE
SI SK TR**

(43) Date de publication de la demande:
**25.08.2010 Bulletin 2010/34**

(73) Titulaire: **Siemens SAS**
**93200 Saint-Denis (FR)**

(72) Inventeur: **MAIRE, Alain**
**F-78180 Montigny le Bretonneux (FR)**

(74) Mandataire: **Fischer, Michael et al**
**Siemens AG**
**Postfach 22 16 34**
**80506 München (DE)**

(56) Documents cités:
**EP-A- 0 716 001     DE-A1-102005 001 403**
**DE-B1- 2 813 078    US-A1- 2002 088 904**

**Description**

La présente invention concerne un dispositif de mesure de déplacement d'un véhicule autoguidé selon le préambule de la revendication 1.

Plusieurs méthodes ou dispositifs de mesure de déplacement, vitesse ou accélération d'un véhicule sont aujourd'hui connus, en particulier pour des véhicules destinés au transport en commun tels qu'une unité wagon d'un train, d'un métro, un trolleybus, un tramway, un bus ou tel que tout autre véhicule entrainé en traction par au moins un rail de guidage. En particulier dans le cas d'un véhicule autoguidé par un système de trafic (signaux ferroviaires, autopilote à bord ou/et à distance du véhicule, etc.), des précautions pour assurer un autoguidage sûr (contre une panne) et sécurisé (pour des passagers ou des marchandises) est indispensable quel que soit les propriétés de parcours du véhicule. En ce sens, il est primordial de bien connaître en temps réel la position, la vitesse (et l'accélération) du véhicule, en particulier pour des situations où le véhicule est amené à encourir des pertes d'adhérence inévitables telles que lors d'un patinage (lors d'une accélération/traction du véhicule) ou d'un enrayage (lors d'un freinage du véhicule) d'un essieu/ roue.

Lorsque le véhicule guidé dispose d'un essieu libre de tout effort de traction ou de freinage, le mouvement du véhicule est directement donné par la rotation de l'essieu (ou d'une des roues associée à cet essieu).

Toutefois, cette solution réduit la puissance de traction ou de freinage donc les performances du véhicule, c'est pourquoi la plupart des systèmes n'offrent pas d'essieux libres.

En absence d'essieu libre et pour s'affranchir des conséquences liées au patinage/enrayage en perte d'adhérence d'une de ses roues, plusieurs dispositifs existent et utilisent :

- soit des moyens de mesure totalement indépendants des roues permettant une mesure de vitesse par voie optique ou encore au moyen d'un radar à effet Doppler. Ces dispositifs à caractère coûteux utilisent cependant le plus souvent un tachymètre supplémentaire pour le fonctionnement à basse vitesse et à l'arrêt du véhicule, ce dernier permettant d'extraire la vitesse angulaire d'une roue ou le nombre de tours de roue par unité de temps ;
- soit des centrales inertielles combinant accéléromètres, gyromètres et systèmes de localisation terrestre tels qu'un GPS. Ceux-ci restent toutefois fort coûteux en raison de leur technologie de haut niveau, le plus souvent pour des applications à des systèmes aéronautiques ;
- soit, tel que dans EP 0 716 001 B1, un seul tachymètre disposé sur un essieu et un moyen de prise en compte d'une marge de sécurité aux valeurs mesurées sur une ou les roues afin de tenter de compenser des effets d'un éventuel patinage/enrayage, ce qui dégrade les performances de mesure de déplacement car reste encore trop approximatif. Il s'ensuit aussi un anti-enrayage de compensation qui peut être brutal pour un véhicule et ses passagers ou marchandises. En particulier, la capacité de transport est réduite alors qu'un patinage a lieu ou non, car le dimensionnement du système doit prendre en compte une marge suffisante de compensation partout/en permanence. Le fait de piloter ou guider le véhicule à l'aide de cette seule mesure qui ne connaît pas une amplitude adéquate de l'enrayage, dégrade effectivement la précision de suivi du programme de vitesse et la précision d'arrêt. Il s'ensuit ainsi aussi une réduction de performance en terme de capacité de transport et de précision d'arrête du système ;
- soit, tel que dans US 2005/0137761 A1, un accéléromètre embarqué dans le véhicule et un tachymètre sur un essieu dont des signaux de mesure sont reliés à un calculateur central adapté, même si non explicitement décrit, à prendre en compte des erreurs introduites en présence de perte d'adhérence et délivrant la vitesse et la position du véhicule sur son parcours. En particulier, l'accéléromètre comprend deux axes de mesure afin respectivement de déterminer une accélération suivant une direction de trajectoire du véhicule ainsi que afin de déterminer et donc prendre en compte dans le calcul de déplacement une pente du véhicule par rapport à un plan horizontal. Des valeurs des signaux de mesure de l'accéléromètre et du tachymètre sont aussi comparées à des valeurs seuils de vitesse qui, si dépassement d'un seuil, permettent d'indiquer une présence de perte d'adhérence (patinage/enrayage) du véhicule. Bien que prenant en compte les effets de pente subit par le véhicule, d'autres effets liés à la trajectoire du véhicule en dépendance de l'emplacement de l'accéléromètre (et du positionnement de ses deux axes de mesure) dans le véhicule sont inévitables, car une unité de transport ferroviaire a le plus souvent une géométrie à caractère longiligne le long de laquelle un seul accéléromètre et un tachymètre placé en amont du véhicule ne peuvent assurer un moyen de mesure révélateur des effets agissant sur l'ensemble complet du véhicule, tels que par exemple des effets de courbure ou d'accélération latérale.

Le document DE 10 2005 001 403 A1 divulgue un dispositif de mesure de la vitesse réelle d'un véhicule ferroviaire avec des axes freinés.

Tous ces dispositifs permettent ainsi de calculer le mouvement d'un véhicule guidé, ne disposant pas d'essieux libres de tout effort de freinage et de traction, circulant sur une voie de profil quelconque, cependant avec une précision bien inférieure à celle d'un système « idéal » à essieu libre, car ils ne peuvent s'affranchir complètement des pertes d'adhérence (patinage et enrayage induits par les efforts de traction/freinage) ainsi que d'erreurs induites par des accélérations latérales voire aussi verticales.

Un but de la présente invention est de proposer un dispositif de mesure de déplacement d'un véhicule autoguidé présentant une robustesse de mesure accrue lors d'une perte d'adhérence. Ce dispositif est divulgué dans la revendication 1.

A partir d'un dispositif de mesure de déplacement d'un véhicule autoguidé comprenant à son bord :

- au moins un accéléromètre muni d'un axe de mesure disposé selon une direction longitudinale d'un potentiel déplacement principal rectiligne du véhicule,
- un premier tachymètre disposé sur un essieu en amont du véhicule selon la direction longitudinale,
- un second tachymètre est disposé sur un second essieu en aval du véhicule selon la direction longitudinale,
- des signaux de mesure provenant de l'accéléromètre, du premier et du second tachymètre sont délivrés à une unité de calcul,

il est avantageusement possible de déterminer la vitesse et la position du véhicule sur son trajet en prenant en compte une perte d'adhérence d'au moins un des essieux (libre ou moteur) ainsi qu'un effet exact de pente et de courbure sur la trajectoire du véhicule qui ne reste pas rectiligne, mais évolue horizontalement ou/et verticalement.

A l'inverse de dispositifs décrits dans l'état de la technique et au moyen de l'unité de calcul, ce dispositif peut détecter un début de perte d'adhérence de deux façons complémentaires possible :

- soit au moyen d'un mode de détection fondé sur une variation de signal de mesure d'un des deux tachymètres embarqués et placés en des endroits distincts de la trajectoire du véhicule, par exemple de part et d'autre du véhicule selon sa direction longitudinale de déplacement,
- soit au moyen d'un mode de détection fondé sur une mesure différentielle relative des signaux de mesure provenant des deux tachymètres. Aussi, afin de détecter un intervalle de temps où la dite perte d'adhérence a lieu jusqu'à la fin de celle-ci, le deuxième mode de détection différentielle peut être préconisé au premier.

Il est ici aussi à noter que le dédoublement du tachymètre améliore considérablement un autoguidage du véhicule au sens de la sûreté (redondance assurée en cas une panne d'un des tachymètres) et au sens de la sécurité (mesure et détection de perte d'adhérence mieux répartie sur le véhicule pour le confort et la sécurité des passagers ou/et pour la stabilité des marchandises en cas de compensation active du patinage/enrayage par un système de conduite automatique(autoguidage) du véhicule et non plus par un autre dispositif indépendant d'anti-enrayage). Cet aspect est particulièrement bien adapté aux propriétés (pente, courbure, portion de voie glacée/usée, etc.) du parcours du véhicule à géométrie longiligne.

Avantageusement, l'accéléromètre peut aussi ne comporter qu'un seul axe de mesure (par exemple aligné sur la trajectoire du véhicule qui se déplacerait en ligne droite) qui permet de déterminer une accélération de type longitudinale sur le trajet du véhicule. Il reste donc simple et donc robuste, ainsi que moins coûteux que des accéléromètres munis de plusieurs axes de mesures. Selon ce système, et afin de pouvoir compenser des effets de pente, de courbure ou autres artefacts influant sur la mesure d'une accélération effective (ainsi qu'une vitesse et une position par voie d'intégration) du véhicule sur son trajet, le dispositif selon l'invention peut s'affranchir d'autres axes de mesure de l'accéléromètre, en ce que :

- il utilise un système de mesure de positionnement (banque de données couplée à un simple moyen de balisage au sol ou aérien) fournissant des données d'un profil de trajectoire du véhicule telles que au moins une pente et une courbure (ou un devers selon l'orientation latérale du véhicule) à chaque position du véhicule en déplacement,
- l'accéléromètre muni d'un axe de mesure délivre alors seulement une mesure d'une accélération globale du véhicule,
- un calculateur traite ensuite les données de profil de trajectoire et d'accélération globale mesurée afin de déterminer une accélération corrigée selon la direction longitudinale de déplacement du véhicule pour laquelle sont exactement pris en compte des effets de pente et de courbure influant sur le comportement du véhicule en déplacement donc aussi de l'accéléromètre qui en est solidaire.

Il est à noter que les données de pente et de courbure représentent des données ne nécessitant pas une exactitude ou une redéfinition pour chaque mètre parcouru d'un moyen d'un transport ferroviaire, car leurs valeurs évoluent lentement. Ceci permet donc d'utiliser comme paramètres de pente/courbure une source réduite de banque de données, donc un système simple et robuste qui toutefois ne réduira aucunement la précision de la mesure de déplacement.

Un ensemble de sous-revendications présente également des avantages de l'invention.

Des exemples de réalisation et d'application sont fournis à l'aide de figures décrites :

Figure 1   un véhicule muni d'un dispositif de mesure de déplacement du véhicule autoguidé selon l'invention,

Figure 2   un schéma de prise en compte de l'effet de pente sur le dispositif,

Figure 3   un schéma de prise en compte de l'effet de courbure sur le dispositif.

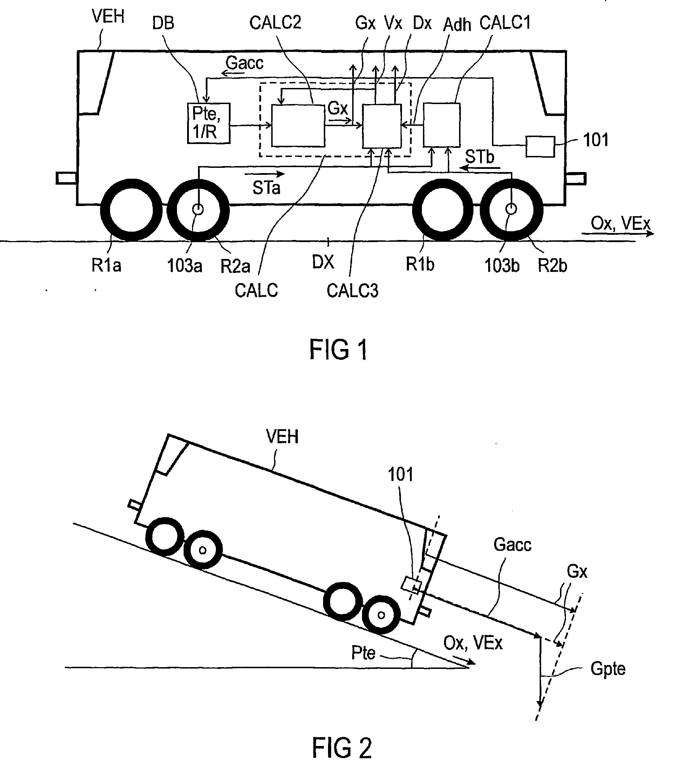

**Figure 1** représente un véhicule VEH muni d'un dispositif de mesure de déplacement du véhicule autoguidé selon l'invention. Le véhicule VEH comporte ici deux bogies comprenant chacun une paire d'essieux R1a, R2a, R1b, R2b dont au moins un des deux essieux R2a, R2b en amont et en aval du véhicule VEH selon une direction longitudinale VEx de déplacement (initialement supposé simplement rectiligne) du véhicule sont respectivement munis d'un tachymètre 103a, 103b. Il est aussi possible de munir tous les essieux de tachymètres de façon à pouvoir affiner la mesure issue des tachymètres d'un même bogie ou sécuriser un défaut d'un tachymètre par un autre du même bogie. De même, il peut être prévu qu'un des essieux d'un bogie soit libre alors que l'autre est moteur. En cas d'utilisation du véhicule VEH dans deux sens opposés suivant la direction longitudinale VEx de déplacement du véhicule, le dispositif comprenant des tachymètres disposés de part et d'autre de sa longueur permet une mesure tachymétrique avantageusement redondante dans les deux sens. Au même titre, un seul accéléromètre 101 embarqué muni d'un unique axe de mesure est toutefois suffisant pour une mesure de déplacement bidirectionnel au moyen de son unique axe de mesure, car sa position dans le véhicule est connue. Il est cependant possible d'utiliser plusieurs accéléromètres, comme deux placés en amont et en aval du véhicule pour des raisons de redondance de sécurité.

Tel que représenté à titre d'exemple de réalisation, le dispositif de mesure de déplacement du véhicule autoguidé VEH comprend ainsi à son bord :

- au moins un accéléromètre 101 muni d'un axe de mesure selon la direction longitudinale VEx correspondant ici à un déplacement supposé rectiligne du véhicule,
- un premier tachymètre 103b disposé sur un essieu en amont du véhicule selon la direction longitudinale VEx,
- un second tachymètre 103a disposé sur un second essieu en aval du véhicule selon la direction longitudinale VEx,
- des signaux de mesure Gacc, STb, STa provenant de l'accéléromètre, du premier et du second tachymètres sont délivrés à une unité de calcul CALC, DB, CALC1, CALC2, CALC3.

Les signaux de mesure instantanée et cyclique STa, STb en sortie des tachymètres 103a, 103b d'au moins un des deux essieux des bogies sont délivrés à un détecteur de perte d'adhérence CALC1 (en cas de patinage ou d'enrayage). Les essieux peuvent être indépendamment libres ou non libres (freinés et/ou motorisés). Le détecteur de perte d'adhérence est ainsi couplé aux signaux de sorties STa, STb de chacun des tachymètres, et chaque signal de sortie fournit une mesure de vitesse angulaire instantanée de l'essieu associé.

Les signaux de sorties STa, STb des deux tachymètres sont également délivrés à un calculateur secondaire CALC3 muni d'une entrée de signal pour un indicateur Adh de détection de perte d'adhérence issu du détecteur de perte d'adhérence CALC1. Ce couplage de signal est utilisable si aucune perte d'adhérence n'est constatée au niveau du détecteur de perte d'adhérence CALC1. A l'inverse en cas de détection active de perte d'adhérence, le détecteur de perte d'adhérence CALC1 permet d'activer l'indicateur Adh indiquant alors une détection suivant deux modes de détection de perte d'adhérence possiblement cumulables selon lesquels :

- une variation de vitesse angulaire instantanée (ou nombre d'impulsions en rotation de roue par unité de temps) d'au moins un des signaux de sortie STa, STb des tachymètres est détectée, en particulier dans le cas d'un début de perte d'adhérence d'au moins un essieu,
- ou/et un écart entre les vitesses angulaires (ou nombre d'impulsions en rotation de roue par unité de temps) de chaque signal de sortie STa, STb des tachymètres est détecté, en particulier très précis dans le cas d'un début de perte d'adhérence, mais aussi pendant la durée et jusqu'à la fin de perte d'adhérence.

En cas de détection de perte d'adhérence, le dispositif prévoit que :

- un système de mesure de positionnement DB fournit des données d'un profil de trajectoire du véhicule telles que au moins une pente Pte et une courbure 1/R (mais aussi d'autres informations possible tel qu'un devers) à chaque position DX du véhicule en déplacement,
- l'accéléromètre 101 muni d'un axe de mesure délivre une mesure d'une accélération globale Gacc du véhicule selon la direction VEx de son axe de mesure,
- un calculateur CALC traite les données de profil de trajectoire Pte, 1/R et d'accélération globale mesurée Gacc afin de déterminer une accélération corrigée Gx selon maintenant une direction longitudinale Ox de déplacement effectif du véhicule pour laquelle des effets de pente et de courbure sont pris en compte.

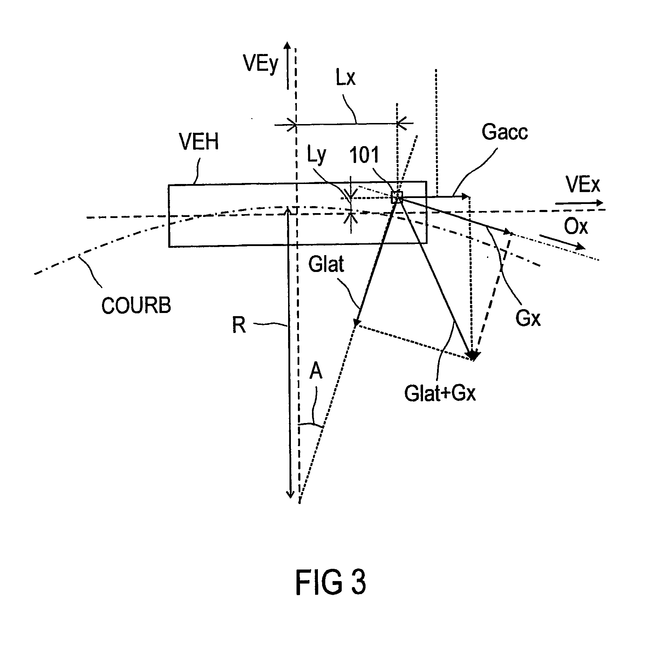

Dans le cas de la figure 1 (comme la figure 2 suivante avec effet de pente), les deux directions longitudinales Ox, VEx sont identiques en raison des vues de profil du véhicule et du modèle physique présenté. A la figure 3 (vue de haut du véhicule avec effet de courbure), il deviendra explicite que la direction longitudinale Ox de déplacement effectif peut différer considérablement de la direction longitudinale VEx pour un déplacement supposé rectiligne. Par extension, on distinguera la direction VEx de l'autre direction Ox par la terminologie « direction VEx » et « direction effective Ox». Afin de décrire simplement l'invention, une représentation modulaire possible du dispositif a été présentée pour laquelle le calculateur CALC comprend :

- un calculateur primaire CALC2 muni d'entrées de signal pour les données de profil de trajectoire Pte, 1/R et pour l'accélération mesurée Gacc selon la direction Ox et une sortie de signal pour l'accélération corrigée Gx selon la direction effective Ox,
- un calculateur secondaire CAL3 muni d'une entrée de signal pour l'indicateur Adh de détection de perte d'adhérence issu du détecteur de perte d'adhérence CALC1,
- le calculateur secondaire CALC3 étant muni de sorties pour délivrer une vitesse estimée Vx et par intégration classique une position estimée Dx du véhicule,
- le calculateur secondaire CALC3 étant muni d'entrées pour les signaux STa, tachymètres pour estimer la vitesse Vx et la position Dx du véhicule, (ces entrées sont nécessaires si, en parallèle de l'indicateur Adh, le détecteur de perte d'adhérence CALC1 ne transmet pas les signaux STa, STb directement au calculateur secondaire CALC3),
- le calculateur secondaire CALC3 étant muni d'une entrée de signal pour l'accélération corrigée Gx issue du calculateur primaire CALC2 afin de ré-estimer la vitesse Vx et la position Dx du véhicule au moins lors d'une perte d'adhérence pour laquelle une valeur précédemment estimée de la vitesse Vx est transmise du calculateur secondaire CALC3 au calculateur primaire CALC2 pour effectuer une ré-estimation de l'accélération corrigée Gx.

De cette façon, un processus de mesure de déplacement est initié itérativement au moins dès le début de détection de perte d'adhérence, voire en permanence si souhaité. Afin de calculer instantanément la vitesse Vx et la position Dx lors d'une phase de perte d'adhérence, il suffit de mémoriser une valeur de vitesse et de position en début de détection de perte d'adhérence et d'appliquer le processus itératif de ré-estimation de l'accélération corrigée Gx à partir de l'accélération Gacc sur l'axe de mesure de l'accéléromètre 101 en actualisant les valeurs de vitesse Vx et de position Dx par intégration classique.

Avant une détection de perte d'adhérence et comme mode de défaut, le calculateur secondaire CALC3 peut aussi simplement fournir la vitesse Vx et la position Dx du véhicule au moyen de paramètres dynamiques liés à la rotation d'au moins un des essieux. Lors d'une perte d'adhérence détectée, le calculateur secondaire CALC3 délivre la vitesse Vx au calculateur primaire CALC2, ce dernier délivrant en retour l'accélération Gx au calculateur secondaire CALC3. Le calculateur secondaire CALC3 a alors toutes les informations nécessaires pour ré-estimer les vitesses Vx et la position Dx selon la direction effective VEx.

Bien que non représenté dans les figures, l'accéléromètre peut comporter plusieurs axes de mesures distincts, afin de pouvoir déterminer plus de composantes d'accélération dues en particulier à des effets comme, entre autre, la pente ou la courbure. Ceci permet de compenser un défaut de livraison des données (pente, courbure, etc.) à partir du système de mesure de positionnement DB (par exemple par un moyen de balisage activant une banque de données contenant les données voulues, par GPS (=Geographical Position System), etc.).

**Figure 2** représente un schéma (vue de côté) de prise en compte de l'effet de pente Pte par rapport à l'horizontale subi par le véhicule VEH en descente rectiligne selon la figure 1. L'accéléromètre 101 mesure l'accélération longitudinale Gacc sur son axe de mesure oblique (selon la direction VEx, rectiligne) à cause de la Pente Pte. L'accélération longitudinale Gacc est en réalité la somme de l'accélération longitudinale Gx selon la direction effective Ox et de l'accélération liée à l'effet de pente Gpte ou la pesanteur.

Le dispositif selon l'invention permet de mesurer exactement l'accélération longitudinale Gx selon la direction effective Ox, puis la vitesse Vx et la position Dx, telles que décrites à la figure 1.

**Figure 3** représente un schéma (vue de haut) de prise en compte de l'effet de courbure 1/R ayant un rayon de courbure R subi par le véhicule VEH sur une portion latéralement courbée COURB de trajet selon la figure 1. L'accéléromètre 101 est disposé à une distance longitudinale Lx connue (selon la direction longitudinale VEx) et une distance latérale Ly connue (selon une direction VEy perpendiculaire à la direction longitudinale VEx) par rapport au centre du véhicule VEH. Il est important de rappeler que ce facteur de dimensionnement est important pour la prise en compte de l'effet de courbure, car suivant ces distances choisies, l'effet de courbure a une influence variablement forte sur la mesure de déplacement et, au pire, peut donc la fausser irrémédiablement. Ceci est d'autant plus conséquent que le véhicule est supposé longiligne suivant sa direction longitudinale VEx de déplacement, tel que pour une unité de transport ferroviaire de passagers.

L'accéléromètre 101 mesure l'accélération longitudinale Gacc sur son axe de mesure selon la direction rectiligne VEx, toutefois non tangentielle à la courbe COURB sur un rayon de courbure passant par l'accéléromètre 101. L'accélération longitudinale Gacc est en réalité la somme de l'accélération longitudinale Gx selon la direction effective Ox (c'est-à-dire tangentielle à la courbe COURB sur un rayon de courbure passant par l'accéléromètre 101) et de l'accélération liée à l'effet de courbure latérale Glat (force centrifuge). Le dispositif selon l'invention permet ainsi de mesurer exactement l'accélération longitudinale Gx selon la direction effective Ox, puis la vitesse Vx et la position Dx, telles que décrites à la figure 1.

Il est ainsi possible de décrire un procédé de mise en oeuvre du dispositif généralement appliqué pour des données instantanées de pente Pte et de courbure 1/R selon lequel :

- l'accélération corrigée Gx est la somme de l'accélération globale mesurée Gacc, de l'accélération sous effet de pente Gpte et de l'accélération sous effet de courbure Glat,
- l'accélération sous effet de pente Gpte est proportionnelle à la pesanteur,
- l'accélération sous un effet de courbure Glat est le produit entre :

  a) un sinus d'un angle instantané A dont le sommet est au centre de courbure 1/R et dont les côtés passent par le centre du véhicule et par l'accéléromètre
  b) et la vitesse Vx élevée au carré et divisée par la somme d'un rayon R de la courbure 1/R et d'une distance latérale Ly de l'accéléromètre par rapport au centre du véhicule,

- l'angle instantané A est approximé par une distance longitudinale Lx de l'accéléromètre par rapport au centre du véhicule divisée par la somme du rayon de courbure R et de la distance latérale Ly de l'accéléromètre par rapport au centre du véhicule,
- où la distance longitudinale Lx est positive ou négative suivant que l'accéléromètre est disposé en amont ou en aval du véhicule selon sa direction de déplacement et la distance latérale Ly est positive ou négative suivant que l'accéléromètre est disposé à l'extérieur ou à l'intérieur d'une courbe relative à la courbure 1/R.

Ce procédé se laisse modéliser par le système d'équations (1), (2), (3), (4) suivant :

$$(1) \quad Gx = Gacc + Gpte + Glat$$

$$(2) \quad Gpte = Pte \times Pesanteur \ (9.81 \ m/s2),$$

$$(3) \quad Glat = (Vx^2 \ / \ (R + Ly)) \times Sinus \ (A)$$

$$(4) \quad A = Lx \ / \ (R + Ly)$$

## Revendications

1. Dispositif de mesure de déplacement d'un véhicule autoguidé (VEH) comprenant à son bord :

   - au moins un accéléromètre (101) muni d'un axe de mesure selon une direction longitudinale (VEx) d'un principal déplacement supposé rectiligne du véhicule,
   - un premier tachymètre (103b) disposé sur un essieu en amont du véhicule selon la direction longitudinale,
   - un second tachymètre (103a) est disposé sur un second essieu en aval du véhicule selon la direction longitudinale,
   - des signaux de mesure provenant de l'accéléromètre, du premier et du second tachymètres sont délivrés à une unité de calcul, **caractérisé en ce que**
   en cas de détection de perte d'adhérence:
   - un système de mesure de positionnement (DB) fournit des données d'un profil de trajectoire du véhicule telles que au moins une pente (Pte) et une courbure (1/R) à chaque position (DX) du véhicule en déplacement,

- l'accéléromètre muni d'un axe de mesure délivre une mesure d'une accélération globale (Gacc) du véhicule selon la direction longitudinale (VEx),
- un calculateur (CALC) traite les données de profil de trajectoire (Pte, 1/R) et d'accélération globale mesurée (Gacc) afin de déterminer une accélération corrigée (Gx) selon une direction longitudinale (Ox) de déplacement effectif du véhicule pour laquelle des effets de pente et de courbure sont pris en compte.

2. Dispositif selon revendication 1, comprenant :

- un détecteur de perte d'adhérence (CALC1) d'au moins un des deux essieux,
- le détecteur de perte d'adhérence étant couplé à des signaux de sorties (STa, STb) de chacun des tachymètres,
- chaque signal de sortie fournit une mesure de vitesse angulaire instantanée de l'essieu associé.

3. Dispositif selon revendication 2, pour lequel le détecteur de perte d'adhérence (CALC1) comprend un indicateur (Adh) de deux modes cumulables de détection de perte d'adhérence selon lesquels une variation de vitesse angulaire instantanée d'au moins un des signaux de sortie est détectée ou/et un écart entre les vitesses angulaires de chaque signal de sortie est détecté.

4. Dispositif selon revendication 3, pour lequel le calculateur (CALC) comprend :

- un calculateur primaire (CALC2) muni d'entrées de signal pour les données de profil de trajectoire (Pte, 1/R) et pour l'accélération mesurée (Gacc) et une sortie de signal pour l'accélération corrigée (Gx),
- un calculateur secondaire (CALC3) muni d'une entrée de signal pour l'indicateur (Adh) de détection de perte d'adhérence issu du détecteur de perte d'adhérence (CALC1),
- le calculateur secondaire (CALC3) étant munis de sorties pour délivrer une vitesse estimée (Vx) et une position estimée (Dx) du véhicule,
- le calculateur secondaire (CALC3) étant muni d'entrées pour les signaux (STa) tachymètres pour estimer la vitesse (Vx) et la position (Dx) du véhicule, - le calculateur secondaire (CALC3) étant muni d'une entrée de signal pour l'accélération corrigée (Gx) issue du calculateur primaire (CALC2) afin de ré-estimer la vitesse (Vx) et la position (Dx) du véhicule au moins lors d'une perte d'adhérence pour laquelle une valeur précédemment estimée de la vitesse (Vx) est transmise du le calculateur secondaire (CALC3) au calculateur primaire (CALC2) pour effectuer une ré-estimation de l'accélération corrigée (Gx).

5. Dispositif selon revendication 3, pour lequel :

- l'accélération corrigée (Gx) est la somme de l'accélération globale mesurée (Gacc), de l'accélération sous effet de pente (Gpte) et de l'accélération sous effet de courbure (Glat),
- l'accélération sous effet de pente (Gpte) est proportionnelle à la pesanteur,
- l'accélération sous un effet de courbure (Glat) est le produit entre :

a) un sinus d'un angle instantané (A) dont le sommet est au centre de courbure (1/R) et dont les côtés passent par le centre du véhicule et par l'accéléromètre
b) et la vitesse (Vx) élevée au carré et divisée par la somme d'un rayon (R) de la courbure (1/R) et d'une distance latérale (Ly) de l'accéléromètre par rapport au centre du véhicule,

- l'angle instantané (A) est approximé par une distance longitudinale (Lx) de l'accéléromètre par rapport au centre du véhicule divisée par la somme du rayon de courbure (R) et de la distance latérale (Ly) de l'accéléromètre par rapport au centre du véhicule.
- où la distance longitudinale (Lx) est positive ou négative suivant que l'accéléromètre est disposé en amont ou en aval du véhicule selon sa direction de déplacement et la distance latérale (Ly) est positive ou négative suivant que l'accéléromètre est disposé à l'extérieur ou à l'intérieur d'une courbe relative à la courbure (1/R).

6. Dispositif selon une des revendications précédentes 3 à 5, pour lequel avant une détection de perte d'adhérence le calculateur secondaire (CALC3) fournit la vitesse (Vx) et la position (Dx) du véhicule au moyen de paramètres dynamiques liés à la rotation d'au moins un des essieux.

7. Dispositif selon revendication 6, pour lequel lors d'une perte d'adhérence le calculateur secondaire (CALC3) délivre la vitesse (Vx) au calculateur primaire (CALC2), ce dernier délivrant en retour l'accélération (Gx) au calculateur secondaire (CALC3).

8. Dispositif selon une des revendications précédentes 3 à 7, pour lequel l'accéléromètre comporte plusieurs axes de mesure distincts(afin d'affiner la détermination de l'accélération corrigée (Glong) et/ou de compenser une perte d'information provenant du système de mesure de positionnement fournissant les données odométriques).

**Claims**

1. Device for measuring the movement of a self-guided vehicle (VEH) comprising on-board thereof:

   - at least one accelerometer (101) comprising a measurement axis in the longitudinal direction (VEx) of a main movement of the vehicle, assumed to be rectilinear,
   - a first tachometer (103b) provided on an axle upstream from the vehicle in the longitudinal direction,
   - a second tachometer (103a) is provided on a second axle downstream from the vehicle in the longitudinal direction,
   - measurement signals from the accelerometer and from the first and second tachometers are supplied to a computing unit,
   **characterised in that**
   in the event of detection of adhesion loss:
   - a system for position measurement (DB) supplies data of a profile of the trajectory of the vehicle such as at least one slope (Pte) and one curvature (1/R) at each position (DX) of the vehicle in motion,
   - the accelerometer having a measurement axis provides a measurement of a total acceleration (Gacc) of the vehicle in the longitudinal direction (VEx),
   - a computer (CALC) processes the data of the profile of the trajectory (Pte, 1/R) and the total acceleration measured (Gacc) in order to determine a corrected acceleration (Gx) in a longitudinal direction (Ox) of effective movement of the vehicle for which the effects of slope and curvature are taken into account.

2. Device according to claim 1, comprising:

   - a detector of adhesion loss (CALC1) of at least one of the two axles,
   - the detector of adhesion loss being coupled to output signals (STa, STb) of each of the tachometers,
   - each output signal providing a measurement of instantaneous angular speed of the associated axle.

3. Device according to claim 2, wherein the detector of adhesion loss (CALC1) comprises an indicator (Adh) of two modes of detection of adhesion loss which may be combined, according to which a variation of instantaneous angular speed of at least one of the output signals is detected and/or a difference between the angular speeds of each output signal is detected.

4. The device as claimed in claim 3, wherein the computer (CALC) comprises:

   - a primary computer (CALC2) comprising signal inputs for the data of the profile of the trajectory (Pte, 1/R) and for the measured acceleration (Gacc) and a signal output for the corrected acceleration (Gx),
   - a secondary computer (CALC3) comprising a signal input for the indicator (Adh) for detecting adhesion loss from the detector of adhesion loss (CALC1),
   - the secondary computer (CALC3) comprising outputs for supplying an estimated speed (Vx) and an estimated position (Dx) of the vehicle,
   - the secondary computer (CALC3) being provided with inputs for the signals (STa), tachometers to estimate the speed (Vx) and the position (Dx) of the vehicle-the secondary computer (CALC3) being provided with a signal input for the corrected acceleration (Gx) from the primary computer (CALC2) in order to re-estimate the speed (Vx) and the position (Dx) of the vehicle at least during an adhesion loss for which a previously estimated value of the speed (Vx) is transmitted from the secondary computer (CALC3) to the primary computer (CALC2) to carry out a re-estimation of the corrected acceleration (Gx).

5. Device according to claim 3, wherein:

   - the corrected acceleration (Gx) is the sum of the total measured acceleration (Gacc), the acceleration under the effect of slope (Gpte) and the acceleration under the effect of curvature (Glat),
   - the acceleration under the effect of slope (Gpte) is proportional to gravity,
   - the acceleration under the effect of curvature (Glat) is the product of:

a) a sine of an instantaneous angle (A) of which the apex is at the centre of curvature (1/R) and of which the sides pass through the centre of the vehicle and through the accelerometer,
b) and the speed (Vx) squared and divided by the sum of a radius (R) of curvature (1/R) and a lateral distance (Ly) of the accelerometer relative to the centre of the vehicle,

- the instantaneous angle (A) is approximated by a longitudinal distance (Lx) of the accelerometer relative to the centre of the vehicle divided by the sum of the radius of curvature (R) and the lateral distance (Ly) of the accelerometer relative to the centre of the vehicle.
- where the longitudinal distance (Lx) is positive or negative according to whether the accelerometer is arranged upstream or downstream from the vehicle in its direction of movement and the lateral distance (Ly) is positive or negative according to whether the accelerometer is arranged on the outside or inside of a turn relative to the curvature (1/R).

6. The device as claimed in one of the preceding claims 3 to 5, wherein before a detection of adhesion loss, the secondary computer (CALC3) supplies the speed (Vx) and the position (Dx) of the vehicle by means of dynamic parameters associated with the rotation of at least one of the axles.

7. Device according to claim 6, wherein during an adhesion loss the secondary computer (CALC3) supplies the speed (Vx) to the primary computer (CALC2), said primary computer supplying in return the acceleration (Gx) to the secondary computer (CALC3).

8. Device according to one of the preceding claims 3 to 7, wherein the accelerometer has a plurality of separate measurement axes (in order to refine the determination of the corrected acceleration (Glong) and/or to compensate for a loss of information from the system for measuring position, providing the odometric data).


**Patentansprüche**

1. Vorrichtung zum Messen der Bewegung eines selbstgesteuerten Fahrzeugs (VEH), im Fahrzeug umfassend:

- mindestens einen Beschleunigungsmesser (101) mit einer Messachse entlang einer Längsrichtung (VEx) einer angenommenerweise geradlinigen Hauptbewegung des Fahrzeugs,
- ein erstes Tachometer (103b), das in Längsrichtung gesehen an einem Radsatz vorn am Fahrzeug angeordnet ist,
- ein zweites Tachometer (103a), das in Längsrichtung gesehen an einem Radsatz hinten am Fahrzeug angeordnet ist,
- wobei Messsignale aus dem Beschleunigungsmesser, aus dem ersten und aus dem zweiten Tachometer an eine Rechnereinheit abgegeben werden, **dadurch gekennzeichnet, dass**
im Fall der Erkennung des Haftreibungsverlustes:
- ein Positionierungsmesssystem (DB) Daten eines Bewegungsbahnprofils des Fahrzeugs abgibt, darunter mindestens eine Neigung (Pte) und eine Krümmung (1/R) für jede Position (DX) des sich bewegenden Fahrzeugs,
- der mit einer Messachse versehene Beschleunigungsmesser eine Messung einer Gesamtbeschleunigung (Gacc) des Fahrzeugs in Längsrichtung (VEx) abgibt,
- ein Rechner (CALC) die Bewegungsbahnprofildaten (Pte, 1/R) und die Daten der gemessen Gesamtbeschleunigung (Gacc) verarbeitet, um eine korrigierte Beschleunigung (Gx) entlang einer tatsächlichen Längsbewegungsrichtung (Ox) des Fahrzeugs zu bestimmen, bei der die Auswirkungen der Neigung und Krümmung berücksichtigt sind.

2. Vorrichtung nach Anspruch 1, umfassend:

- einen Detektor für den Haftreibungsverlust (CALC1) an mindestens einem der Radsätze,
- wobei der Detektor für den Haftreibungsverlust mit Ausgangssignalen (STa, STb) jedes der Tachometer verbunden ist,
- wobei jedes Ausgangssignal eine Messung der momentanen Winkelgeschwindigkeit des zugehörigen Radsatzes liefert.

3. Vorrichtung nach Anspruch 2, bei der der Detektor für den Haftreibungsverlust (CALC1) eine Anzeige (Adh) für zwei kumulierbare Modi der Detektion des Haftreibungsverlustes umfasst, gemäß denen eine Änderung der momentanen Winkelgeschwindigkeit von mindestens einem der Ausgangssignale erkannt wird und/oder eine Abweichung zwischen den Winkelgeschwindigkeiten jedes Ausgangssignals erkannt wird.

**4.** Vorrichtung nach Anspruch 3, bei der der Rechner (CALC) Folgendes umfasst:

- einen Primärrechner (CALC2) mit Signaleingängen für die Bewegungsbahnprofildaten (Pte, 1/R) und für die gemessene Beschleunigung (Gacc) und einem Signalausgang für die korrigierte Beschleunigung (Gx),
- einen Sekundärrechner (CALC3) mit einem Signaleingang für die Anzeige (Adh) der Erkennung eines Haftreibungsverlustes aus dem Detektor für den Haftreibungsverlust (CALC1),
- wobei der Sekundärrechner (CALC3) Ausgänge besitzt, um eine geschätzte Geschwindigkeit (Vx) und eine geschätzte Position (Dx) des Fahrzeugs abzugeben,
- wobei der Sekundärrechner (CALC3) Eingänge für die tachymetrischen Signale (STa) zur Schätzung der Geschwindigkeit (Vx) und der Position (Dx) des Fahrzeugs besitzt,
- wobei der Sekundärrechner (CALC3) einen Signaleingang für die korrigierte Beschleunigung (Gx) aus dem Primärrechner (CALC2) besitzt, um die Geschwindigkeit (Vx) und die Position (Dx) des Fahrzeugs zumindest bei einem Haftreibungsverlust erneut zu schätzen, bei dem ein zuvor geschätzter Wert der Geschwindigkeit (Vx) vom Sekundärrechner (CALC3) zum Primärrechner (CALC2) übertragen wird, um eine erneute Schätzung der korrigierten Beschleunigung (Gx) vorzunehmen.

**5.** Vorrichtung nach Anspruch 3, bei der:

- die korrigierte Beschleunigung (Gx) die Summe aus der gemessenen Gesamtbeschleunigung (Gacc), der Beschleunigung unter der Wirkung der Neigung (Gpte) und der Beschleunigung unter der Wirkung der Krümmung (Glat) ist,
- die Beschleunigung unter der Wirkung der Neigung (Gpte) proportional zur Schwere ist,
- die Beschleunigung unter der Wirkung der Krümmung (Glat) das Produkt ist aus:

a) einem Sinus eines momentanen Winkels (A), dessen Spitze im Mittelpunkt der Krümmung (1/R) liegt und dessen Seiten durch den Mittelpunkt des Fahrzeugs und durch den Beschleunigungsmesser verlaufen,
b) und der Geschwindigkeit (Vx) zum Quadrat dividiert durch die Summe aus einem Radius (R) der Krümmung (1/R) und einem seitlichen Abstand (Ly) des Beschleunigungsmessers vom Mittelpunkt des Fahrzeugs,

- der momentane Winkel (A) durch einen Längsabstand (Lx) des Beschleunigungsmessers vom Mittelpunkt des Fahrzeugs dividiert durch die Summe aus dem Krümmungsradius (R) und dem seitlichen Abstand (Ly) des Beschleunigungsmessers vom Mittelpunkt des Fahrzeugs genähert wird,
- wobei der Längsabstand (Lx) positiv oder negativ ist, je nachdem, ob der Beschleunigungsmesser in Bewegungsrichtung gesehen vorn oder hinten am Fahrzeug angeordnet ist, und der seitliche Abstand (Ly) positiv oder negativ ist, je nachdem, ob der Beschleunigungsmesser bezüglich der Krümmung (1/R) an der Außen- oder Innenseite einer Kurve angeordnet ist.

**6.** Vorrichtung nach einem der vorangehenden Ansprüche 3 bis 5, bei der vor einer Erkennung des Haftreibungsverlustes der Sekundärrechner (CALC3) die Geschwindigkeit (Vx) und die Position (Dx) des Fahrzeugs über dynamische Parameter im Zusammenhang mit der Drehung von mindestens einem der Radsätze abgibt.

**7.** Vorrichtung nach Anspruch 6, bei der der Sekundärrechner (CALC3) bei einem Haftreibungsverlust die Geschwindigkeit (Vx) an den Primärrechner (CALC2) abgibt, woraufhin dieser die Beschleunigung (Gx) an den Sekundärrechner (CALC3) zurückgibt.

**8.** Vorrichtung nach einem der vorangehenden Ansprüche 3 bis 7, bei der der Beschleunigungsmesser mehrere verschiedene Messachsen umfasst (um die Bestimmung der korrigierten Beschleunigung (Glong) zu verfeinern und/oder einen Verlust der Information aus dem Positionierungsmesssystem, das die Wegmessungsdaten liefert, auszugleichen).

FIG 1

FIG 2

FIG 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0716001 B1
- US 20050137761 A1

- DE 102005001403 A1